Europäisches Patentamt

European Patent Office

Office européen des brevets

(11) Publication number:

**0 202 045**
**A1**

# (12) EUROPEAN PATENT APPLICATION

(21) Application number: **86303134.0**

(22) Date of filing: **25.04.86**

(51) Int. Cl.⁴: **G 02 B 23/16**

(30) Priority: **03.05.85 GB 8511405**

(43) Date of publication of application:
**20.11.86 Bulletin 86/47**

(84) Designated Contracting States:
**AT BE CH DE FR IT LI LU NL SE**

(71) Applicant: **English Electric Valve Company Limited**
**106, Waterhouse Lane**
**Chelmsford, Essex, CM1 2QU(GB)**

(72) Inventor: **Barry, Nicholas Peter**
**82, Sutherland Avenue**
**Maida Vale London, W9(GB)**

(74) Representative: **Hoste, Colin Francis et al,**
**The General Electric Company p.l.c. Central Patent**
**Department (Chelmsford Office) Marconi Research**
**Centre West Hanningfield Road**
**Great Baddow Chelmsford CM2 8HN, Essex(GB)**

(54) **Eye guards.**

(57) An eye-guard for a night-sight augmented by an image intensifier requires some form of removable shutter to be employed to block the light emanating therefrom until the sight is actually to be used.

The present invention proposes an eye-guard that is in essence constructed from two open-ended tubes coaxially mounted for relative axial sliding movement one within the other against a restoring force, the larger diameter, outer, tube bearing hingedly mounted therein two opposing opaque flaps extending across and "closing" this tube, the arrangement being such that as the two tubes are caused to slide relative one to the other so the smaller diameter, inner, tube pushes the flaps out of the way, and thereby "opens" the tube and thus the sight.

FIG.3A.

EP 0 202 045 A1

## Eye-guards

This invention concerns eye-guards, and relates in particular to eye-guards to be employed on devices like telescopic or other sights possibly for use on a weapon such as a rifle.

It is conventional for many types of devices that require to be pointed - a projectile-launching weapon, such as a rifle, is one typical example, while a camera is another - to have a sight by means of which the user may align the device with the "target". Where these sights are augmented in some way - say, by being telescopic, or by employing image intensification (as in a night-sight) - it is common for the image end of the sight, the eye piece into which the user looks, to bear an eye-guard. Such an eye-guard is a cup-shaped device made from some relatively soft and flexible material (such as a rubber) and positioned coaxially of the sight and with the base of the "cup", which is open, mounted at the end of the sight and the rim of the "cup" facing towards the user. In use, the sight is placed close to the eye such that the flexible rubber cup fits snugly around the eye socket - the rim is often shaped to make this fit better. The purpose of such an eye-guard is two-fold. Firstly, the user may now look down the sight undisturbed by light directed towards him from either side, for his eye is shielded therefrom by the guard. Secondly, because the eye-guard is made of a soft, flexible material it cushions his face against such shock as might be transmitted thereagainst by the sight from the device on which it is mounted - as, say, the weapon is fired and recoils.

The invention is concerned primarily with eye-guards for use on sights employing image intensifiers.

It is now quite common for sights, especially weapon sights, to be augmented by an image intensifier, so that they can be used as night-sights. The presently-used second- and third-generation intensifiers cause such light as there is from the scene to fall on a photo-cathode (a semi-conductor device in third-generation equipment) so as to generate a shower of electrons, and then direct these relatively few electrons through a micro-channel plate intensifier device, where the number of electrons is vastly increased, and onto a phosphorescent screen (such as in a television) to form a bright image of the viewed scene. Using only the available natural light a modern intensified sight can provide a clear image of the viewed scene even on a cloudy moon-less night. A night-sight such as this may well find use in circumstances where the user does not want the illumination from the image screen to be visible to others, and yet equally does not wish to have to keep switching the intensifier on and off. It has been proposed, therefore, that some form of removable shutter be employed to cover the screen, or otherwise block the light emanating therefrom, until the sight is actually to be used. Moreover, it has been suggested that this shutter could form part of the sight's eye-guard, and should be arranged to be automatically moved out of the way by the mere bringing of the sight into position at the eye. Indeed, one possible solution incorporates two flaps internally mounted across the eye-guard, the combination of flap mounting and eye-guard shape being cleverly designed such that as the guard is deformed as the sight is snuggly positioned at the eye so, with a toggle action, the two flaps are snapped to either side out of the way. This system works, but has a number of disadvantages. For instance, it is necessary to make the guard of rather firm material, so prolonged use can cause pain (especially if on a weapon that is fired) as it digs into the flesh surrounding the eye. Also the system needs a very positive, and symmetrical, squashing deformation of the guard else either or both flaps fail to open sufficiently. Again, the actual construction of the guard is not easy, having regard to the quite critical shaping of the parts and the mounting of the two flaps.

The present invention proposes a functionally similar but mechanically somewhat different flap arrangement, wherein the eye-guard is in essence constructed from two open-ended tubes coaxially mounted for relative axial sliding movement one within the other against a restoring force, the larger diameter, outer, tube bearing hingedly mounted therein two opposing flaps extending across and "closing" this tube, the arrangement being such that as the two tubes are caused to slide relative one to the other so the smaller diameter, inner, tube pushes the flaps out of the way, and thereby "opens" the tube and thus the sight.

In one aspect, therefore, the invention provides an eye-guard, comprising a generally tubular body portion (the body) having at one end an eye-cup and at the other end mounting means whereby the guard can be mounted on some device, wherein the body includes:

two coaxial tubular sections (tubes) mounted for axial movement one relative to and within the other; and

means providing a restoring force to oppose this movement in one direction; and wherein

the outer tube bears at least two opposed inwardly- directed flaps hingedly and resiliently mounted thereon to extend across, and "close" , this tube

such that

as the tubes are caused to move relatively against the restoring force so the inner tube pushes the flaps out of the way, and thereby "opens" the outer tube, and as thereafter the tubes are permitted to move relatively driven by the restoring force so the inner tube is withdrawn and allows the flaps to regain their "closed" position.


The eye-guard of the invention may, of course, be for any purpose for which an eye-guard is useful. Specifically, it may be employed on a sight, particularly an intensified sight (night-sight) such as is used with a rifle.

The inventive eye-guard has a body (wherein resides the components that may be said to be the main features of the invention) having at one end an eye-cup and at the other end mounting means by which the guard can be secured to whatever device it is to be used with. In general, both the eye-cup and the mounting means can be of any sort, and the conventional varieties are for the most part quite satisfactory. Typically, the eye-cup is soft and deformable, and is shaped to fit the (right) eye socket, and the mounting means is merely a suitably-sized aperture at the "device" end of the body, possibly with inner circumferential ribs, to fit firmly over the "eye" end of the relevant device.

The body portion (body) of the inventive eye-guard is generally tubular (and conveniently of circular cross-section), and includes two tubular sections (tubes) mounted for relative axial movement one within the other. The two tubes are most preferably of circular cross-section, and - to enable one to move within the other - one tube (the inner tube) has an external diameter that is smaller than the internal diameter of the other tube (the outer tube). The inner tube should of course be diametrically smaller than the outer by an amount sufficient to allow the flaps to be accomodated (in their pushed-back state) without preventing free relative movement of the two tubes. The relative axial dimensions of each tube should be such that in use the inner tube is able to move within the outer tube a distance sufficient for it to push the flaps right out of the way, while the outer tube should be long enough to accomodate the flaps when so pushed.

The relative axial movement of the two tubes can be movement of one tube into the other or movement of one tube within the other. Which it is depends upon the detailed configuration of the body's parts, as discussed further hereinafter, though briefly the two tubes either can be positioned one within the other, and move one within the other, or can be positioned one adjacent the other, and move that one into the other.

The two tubes are associated with means to provide a restoring force that will act to oppose relative movement from a rest position in one direction (and thus to permit, and indeed encourage, the tubes to be returned to their rest position after relative movement away therefrom). Though doubtless other possibilities exist, it is preferred that this restoring-force-providing means be a "spring" or "elastic" member joining the two tubes together, compression or extension of this member as the tubes are moved generating the required restoring force. One particularly preferred embodiment of this member, combining both springiness and elasticity, is a bellows formed of some rubbery material and circumferentially joining the tubes. Two examples of a bellows-using body are described further hereinafter in connection with the accompanying Drawings; in each case the bellows is compressed when the tubes move relatively to open the flaps.

To provide the required ability for opening and closing the eye-guard, the outer tube of the inventive guard's body bears at least two flaps. The purpose of these flaps is to "close" or "block" the body to the passage of light; each flap is thus naturally of some light-opaque material, and extends inwardly of the tube over an area which "fits" both with the inside of the tube and with the other (opposing) flaps (with which it is generally coplanar) to attain this end. If there are two only flaps then each flap is essentially a semicircular segment (assuming a circular tube) extended very slightly in a direction towards the other flap in order to overlap therewith. With three flaps each might have a generally $\frac{1}{3}$-circle pie slice form, with four a $\frac{1}{4}$-circle pie slice form, and so on; two is generally most satisfactory.

Though it has just been said that the flaps "close" the outer tube, and that to do this the flaps "fit" inside this tube, in the preferred embodiment this fit is a loose fit, for very preferably the flaps block light passing through the outer tube, and thus through the eye-guard body, not so much by being a "sealing" fit inside the outer tube but by abutting up against the relevant open end of the inner tube, so blocking that tube and thus preventing light passing through the body.

The flaps are hingedly, and resiliently, mounted on the outer tube so that they can be pushed out of the way by the inner tube (as it moves relative to the outer), thus "opening" the tube, and yet return to their "closed", or rest, position when the inner tube returns to *its* rest position. It is particularly convenient to have each flap extend from a short stalk of resilently deformable (rubber-like) material itself secured to the outer tube. Indeed, in one particularly preferred embodiment each flap is integral with this stalk, and the stalk is integral with the tube.

In order to ensure that the flaps open fully even under fairly light pressure (i.e, small relative movement of the two tubes), each preferably carries on its inner-tube-adjacent surface a wedge- or cam-like projection against which the end of the inner tube bears (after some intial movement). Moreover, with two only flaps it is desirable to align them such that their joining line is at roughly 45$^{\circ}$ to the left-right line across a right-eye eye-cup (in this way the applied force at the major point of contact of the eye-cup with the face in the region of the right eye - this contact point being the inner/left part of the eyebrow area - is "symmetrical" across both flaps, and so both flaps open).

In the two main embodiments of the invention discussed further hereinafter with reference to the accompanying Drawings, either the flaps open away from the eye-cup as the eye-cup-distant end of the inner tube moves towards the guard mounting means or - conversely - the flaps open towards the eye-cup as the eye-cup- adjacent end of the inner tube moves towards the eye-cup. In the former case, which is preferred, the eye-cup is carried by the inner tube, and the guard mounting means by the outer tube, while in the latter case it is the other way around.

As already noted above, the eye-cup is preferably a soft, resiliently-deformable material, as is the bellows form of the restoring means, while the flaps are light-opaque and integral with resiliently-deformable stalks themselves integral with the outer tube. In fact, it is very convenient to make the entire eye-guard out of the same material, and specifically to mould it - conveniently in two parts (the eye-piece and one tube, the mounting means and the other tube) that are then bonded together. A very suitable material for this purpose is that black, soft, flexible silicone rubber available from Waltham Rubber & Plastic Ltd under the name WRAPSIL 8014; the two parts may be bonded together using a silicone adhesive such as General Electric RTV 103 or Dow Corning SILASTIC 732.

Various embodiments of the invention can now be described, though only by way of illustration, with reference to the accompanying Drawings in which:-

Figures 1A,B    are line drawings, in axial section, of one embodiment of the invention in, respectively, the flaps-closed and flaps-open positions;

Figures 2A,B    are similar to Figures 1A,B, but of another embodiment; and

Figures 3A,B,C,D    are respectively cut-away perspective, axial section, end, and part-internal-section views of a more realistic version of the Figure 2 embodiment.

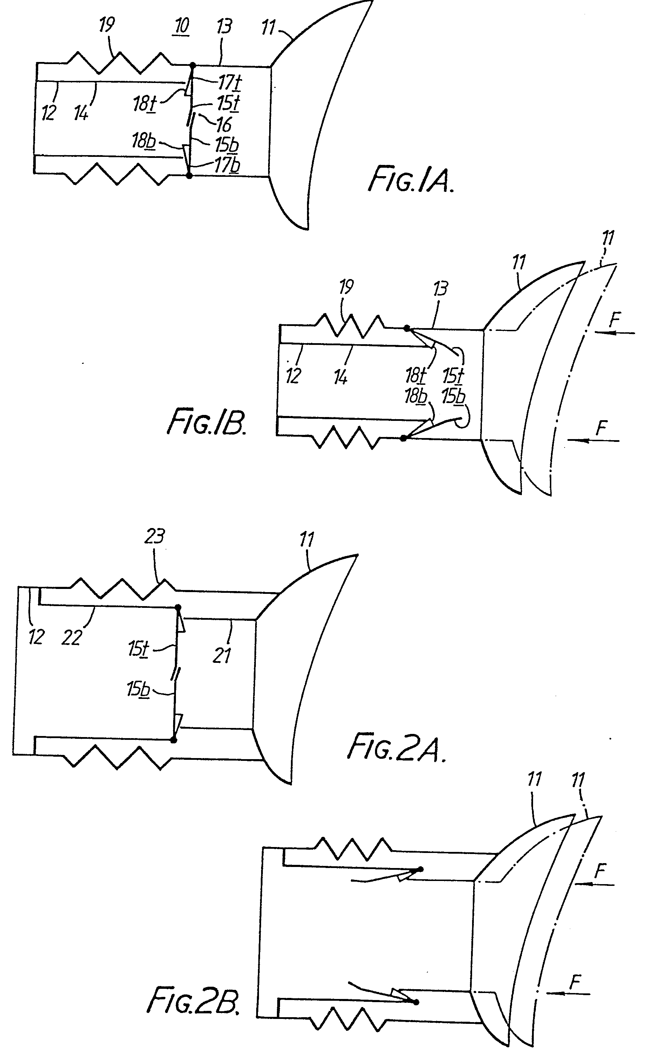

The line drawings of Figures 1 and 2 show the main principle of the invention, namely that the eye-guard has a body formed of two tubes one of which can move "into" the other, pushing (as it does so) obscuring flaps out of the way.

The embodiment of Figure 1 is an eye-guard with a tubular body (generally 10) having an eye-cup (11) at one end (the right, as viewed) and mounting means (12) at the other (the left, as viewed). The body 10 is itself constructed from two coaxial tubes - an outer tube (13) on which the eye-cup 11 is mounted, and an inner tube (14) carrying the mounting means 12. These tubes are so dimensioned that the inner tube 14 fits loosely within the outer tube 13, and can be moved axially therein (in the left-right direction, as viewed).

At the non-eye-cup end of the outer tube 13, and just beyond the non-mounting means end of the inner tube 14, there are two diametrically opposed flaps (15t,b) that extend from the wall of the tube inwardly thereof to overlap (at 16) in the region of a diameter of the tube. Each flap 15 is hingedly mounted on the tube via a short stalk (17t,b); best seen in Figure 3D), and bears, on its side facing the inner tube 14, a wedge-shaped protruberance (18t,b) there to act as a cam.

Finally, the inner and outer tubes 14,13 are connected together by a bellows 19 (here shown extending between the flap-end of the outer tube 14 and the mounting means end of the inner tube 13, so as completely to surround the latter tube). This bellows 19 provides a restoring force if the tubes are squeezed together (as viewed, the outer to the left, the inner to the right); if permitted, the thus-squeezed tubes will move back to their "rest" portions (as in Figure 1A).

The operation of the embodiment of Figure 1 will be clear from a comparison of Figure 1A and Figure 1B; the former shows the eye-guard in the "closed", or rest, state, while the latter shows it in the "open" state. Force $F$ applied to the eye-cup 11 pushes the cup/outer tube combination, causing it to move, against the restoring force generated by the bellows 19, relative to the inner tube/mounting means combination (in Figure 1B the dotted outline shows the rest position of the eye-cup/inner-tube). This movement results in the non-mounting-means end of the inner tube contacting the flaps (if it didn't already) and then pushing them (to the eye-cup end - the right as viewed) up and out of the way. The wedges/cams 18 ensure that the flaps are pushed completely out of the way even with only a little relative tube movement.

A slightly different embodiment is shown in Figures 2A,B. Here, the eye-cup 11 is mounted on the inner tube (21), while the mounting means 12 is on the outer tube (22). And in this particular case the bellows (23) extends right from the eye-cup 11 to the mounting means 12, surrounding both inner and outer tubes 21,22. Other than that, this embodiment is much the same as that of Figures 1A,B, and works in the same sort of way. Force F applied to the eye-cup 11 moves the eye-cup/inner tube combination towards (and into) the outer-tube/mounting means combination (it moves from right to left, as viewed), and as the non-eye-cup end of the inner tube 21 moves into the non-mounting end of the outer tube so it pushes the flaps 15t,b out of the way.

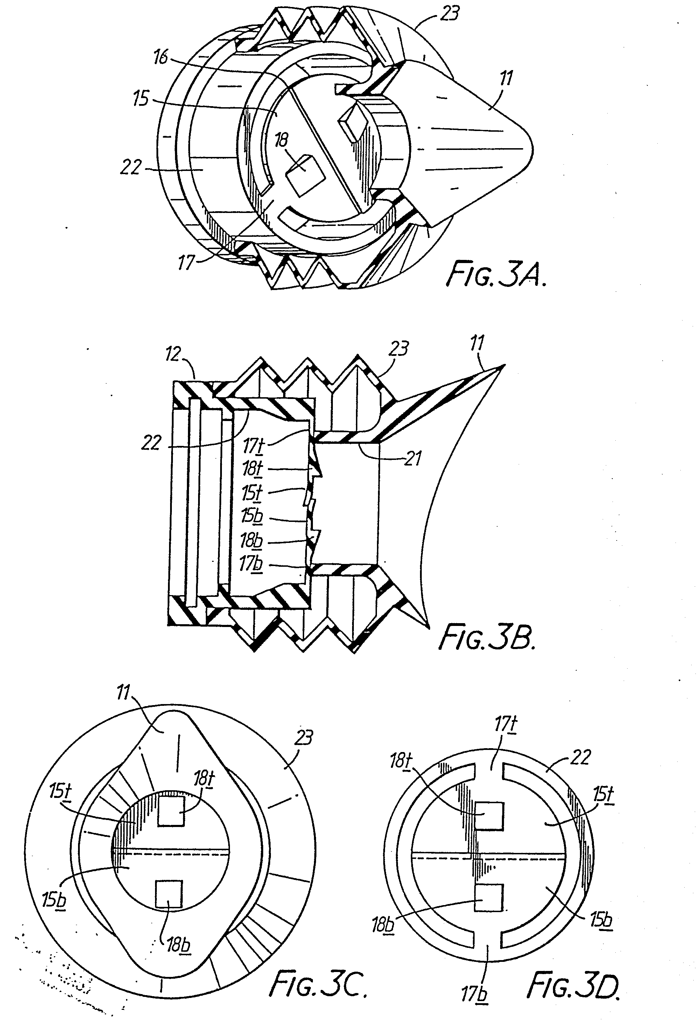

The Figure 2 embodiment is a preferred one, and a somewhat more realistic version therefore is shown in the various views of Figures 3A,B,C and D (the perspective view of Figure 3A only shows the flaps 15t,b aligned at roughly 45$^{\circ}$ to the left-right line across the eye-cup).

CLAIMS

1.    An eye-guard, comprising a generally tubular body portion (the body) having at one end an eye-cup and at the other end mounting means whereby the guard can be mounted on some device, wherein the body includes:

·    two coaxial tubular sections (tubes) mounted for axial movement one relative to and within the other; and

    means providing a restoring force to oppose this movement in one direction; and wherein

    the outer tube bears at least two opposed inwardly-directed flaps hingedly and resiliently mounted thereon to extend across, and "close", this tube.

    such that

    as the tubes are caused to move relatively against the restoring force so the inner tube pushes the flaps out of the way, and thereby "opens" the outer tube, and as thereafter the tubes are permitted to move relatively driven by the restoring force so the inner tube is withdrawn and allows the flaps to regain their "closed" position.

2.    An eye-guard as claimed in Claim 1, wherein the two tubes are of circular cross-section.

3.    An eye-guard as claimed in either of the preceding Claims, wherein the restoring-force-providing means is a bellows formed of some resiliently-deformable material and circumferentially joining the tubes.

4.   An eye-guard as claimed in any of the preceding Claims, wherein there are two only flaps, and for circular section tubes each flap is essentially a semicircular segment extended very slightly in a direction towards the other flap in order to overlap therewith.

5.   An eye-guard as claimed in any of the preceding Claims, wherein the "fit" of the flaps inside the outer tube is a loose fit, and the flaps block light passing through the outer tube, and thus through the eye-guard body, by abutting up against the relevant open end of the inner tube.

6.   An eye-guard as claimed in any of the preceding Claims, wherein each flap extends from a short stalk of resiliently deformable material itself secured to the outer tube.

7.   An eye-guard as claimed in Claim 6, wherein, in order to ensure that the flaps open fully even under fairly light pressure, each carries on its inner-tube-adjacent surface a wedge- or cam-like projection against which the end of the inner tube bears.

9.   An eye-guard as claimed in any of the preceding Claims, wherein with two only flaps they are aligned such that their joining line is at roughly $45^{\circ}$ to the left-right line across a right-eye eye-cup.

10.   An eye-guard as claimed in any of the preceding Claims, wherein the flaps open away from the eye-cup as the eye-cup-distant end of the inner tube moves towards the guard mounting means, and the eye-cup is carried by the inner tube and the guard mounting means by the outer tube.

11. An eye-guard as claimed in any of the preceding Claims, wherein the entire eye-guard is made out of a soft, resiliently-deformable material, and is in two parts - the eye-piece and one tube, the mounting means and the other tube - that are then bonded together.

1/2

0202045

Fig.1A.

Fig.1B.

Fig.2A.

Fig.2B.

23
16
15
18
22
17
11

*FIG.3A.*

12
23
11
22
17t
18t
15t
15b
18b
17b
21

*FIG.3B.*

11
23
15t
18t
15b
18b

*FIG.3C.*

17t
18t
22
15t
18b
15b
17b

*FIG.3D.*

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | MACHINE DESIGN, vol. 41, no. 5, 6th March 1969, page 144; "Scanning the field for ideas" * Lines 10-17; figures * | 1,2,4, 5,7,10 ,11 | G 02 B   23/16 |
| Y | IDEM | 1,3 | |
| | --- | | |
| X | US-A-3 669 523   (O. EDWARDS) * Column  2,  lines  8-11,16-19; column 3, lines 20-28,61-67; fig-ures 4,5 * | 1,2,4-7,11 | |
| | --- | | |
| X | US-A-3 594 062   (D. DISLEY) * Column  1,  lines  13-25,73-75; column 2, lines 1-15; figures 1-4 * | 1,2,4-7,10, 11 | **TECHNICAL FIELDS SEARCHED (Int. Cl.4)** |
| | --- | | G 02 B   23/12 G 02 B   23/16 |
| Y | DE-A-2 100 739   (DE OUDE DELFT-B.V.) * Claims; figures * | 1,3 | |
| | ----- | | |

The present search report has been drawn up for all claims

| Place of search THE HAGUE | Date of completion of the search 11-08-1986 | Examiner WESBY P.B. |
|---|---|---|